# EUROPEAN PATENT APPLICATION

(11) **EP 2 302 907 A2**
(43) Date of publication of application: **30.03.2011**
(21) Application number: 10163811.2
(22) Date of filing: 25.05.2010
(51) Int. Cl.: H04N 5/44

(54) **Television and control method thereof**

(30) Priority: 25.09.2009 KR 20090090934
(71) Applicant: SAMSUNG ELECTRONICS CO., LTD., Suwon-si Gyeonggi-do 442-742 (KR)
(72) Inventor: Park, Nam-hyun, Gyeonggi-do (KR)
(74) Representative: Clark, David James

(57) **Abstract**

A television and a control method thereof are provided. The television includes a communication unit which can communicate with external televisions; and a controller which detects, through the communication unit, data about a user setting item set in a television communicatable through the communication unit, and changes a user setting item based on the detected data.

## Description

### BACKGROUND

### 1. Field

Apparatuses and methods consistent with the exemplary embodiments relate to a television and a control method thereof, and more particularly to an interactive television and a control method thereof.

### 2. Description of the Related Art

A plurality of televisions may be used in a definite place. For example, a hotel, a hospital, a school, or the like place has televisions in respective rooms. Further, one home may have a plurality of televisions as digital technologies have recently been developed and the standard of living has become more prosperous.

Televisions typically have parameters that may be set by a user. In a system including a plurality of televisions, it takes much effort and time for a user to control the respective setting items of the televisions one by one. Moreover, a user is more prone to make errors in setting items on the televisions one by one.

### SUMMARY

One or more exemplary embodiments provide a television and a control method thereof, in which a plurality of televisions can be controlled simultaneously.

One or more exemplary embodiments provide a television and a control method thereof, in which a user setting item can be changed not manually but automatically.

According to an aspect of an exemplary embodiment, there is provided a television including a communication unit which can communicate with external televisions; and a controller which detects, through the communication unit, data about a user setting item set in a television communicatable through the communication unit, and changes a user setting item based on the detected data.

The controller may change the user setting item if a batch change function to change the user setting item of the communicatable televisions in a lump is set up.

The controller may receive information about a time at which the user setting item is set up through the communication unit, and change the user setting item based on the latest setup data among the detected data.

An order of priority may be given among the communicatable televisions, so that the controller changes the user setting item based on data set up in the television having a highest priority.

The television may further include a user input unit to receive input of a user, wherein the controller searches the televisions communicatable through the communication unit and sets up the television selected through the user input unit among the searched televisions as a target television in which the batch change function is performed.

The user setting item may include at least one of power on/off, a channel map, a channel change, a video setting item, and an audio setting item.

The television may further include a user input unit to select the user setting item to which the batch change function is applied.

If the user setting item is changed, the controller may transmit changed data about the user setting item to the communicatable television.

If the user setting item is changed, the controller may store data about the changed user setting item and a time at which the data is changed, so that it is possible to easily detect that the user setting item of another television is changed.

The television may further include a user interface to inform of the changed user setting item.

According to an aspect of another exemplary embodiment, there is provided a control method of a television including a communication unit, the control method including: detecting data about a user setting item s e t in a television communicatable through the communication unit; and changing a user setting item based on the detected data.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a schematic view of a television system according to an exemplary embodiment;

FIG. 2 is a control block diagram of a television of FIG. 1;

FIGS. 3A and 3B show examples of user setting items according to an exemplary embodiment;

FIG. 4 is a schematic view of a television system according to another exemplary embodiment;

FIG. 5 is a control block diagram of a television of FIG. 4; and

FIG. 6 is a control flowchart for explaining an example of a control method of the television of FIG. 4 according to an exemplary embodiment.

### DETAILED DESCRIPTION

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

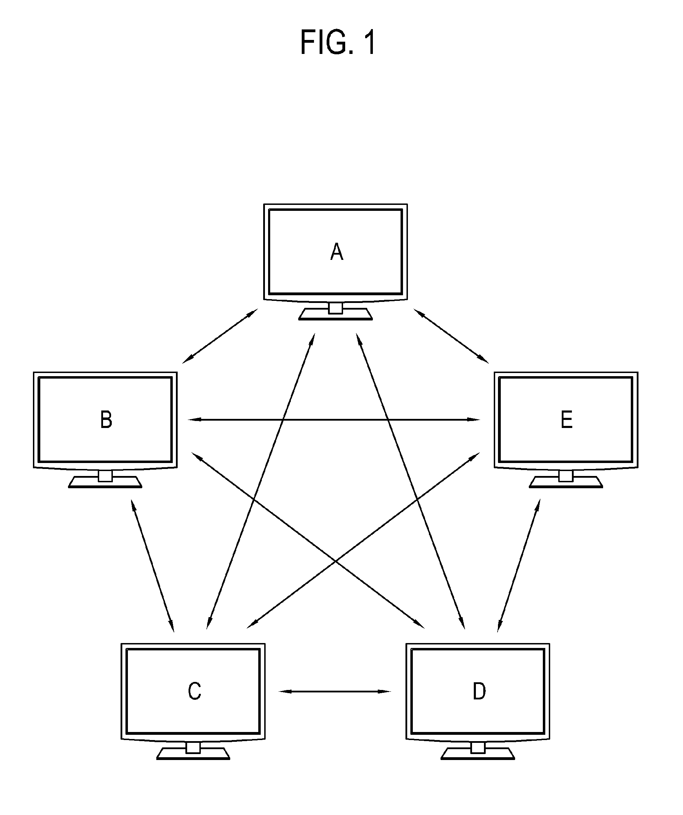

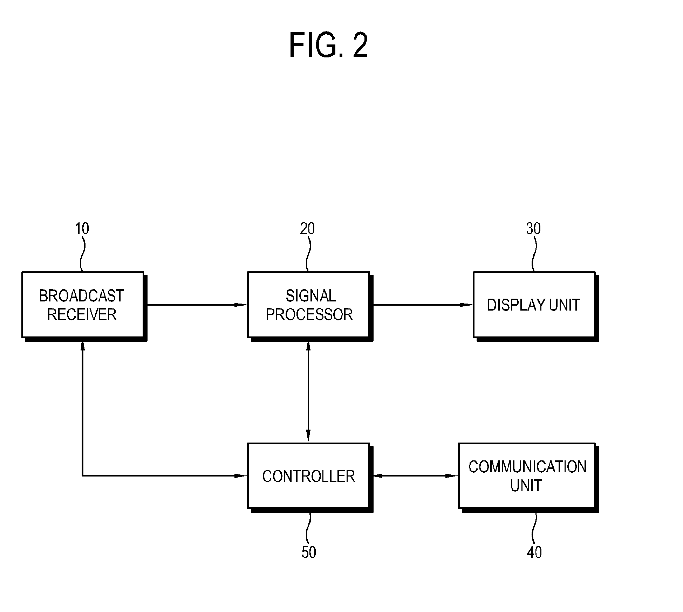

FIG. 1 is a schematic view of a television system according to an exemplary embodiment, and FIG. 2 is a control block diagram of a television of FIG. 1. In this exemplary embodiment, a television is described among electronic apparatuses, but not limited thereto. Any electronic apparatus can be used herein as long as a user setting item to be set by a user is shared and the electronic apparatus is one of a plurality of interactive electronic apparatuses which is able to bidirectional communicate. For example, the inventive concept may be applied to computer systems, set-top boxes, printers or scanners connected via a network, wired or wireless phones, and various home appliances.

As shown therein, a plurality of televisions A, B, C, D, and E are connected via a network for communication. Each television A, B, C, D, and E communicates with another external television, and receives data about the user setting item. Here, the user setting item denotes various setting items controllable by a user. For example, the user setting item may include a power on/off, a channel map, a channel change, a video setting item, or an audio setting item, or some combination thereof. However, the user setting item is not limited to these, and the user setting item may include any item that is changeable by a user. Additionally, the user setting item may vary according to the type of electronic apparatus, and may include specific changeable items that the electronic apparatus supports. Here, it is not necessary to provide the same kinds of plural televisions A, B, C, D and E, but the plurality of televisions A, B, C, D, and E are each capable of receiving data on the basis of protocol via a network and of sharing the changeable user setting items. For example, there may be used the plurality of televisions A, B, C, D, and E produced by one manufacturer. Such a television system may be installed in a hotel, a hospital, a school or a similar location, or be on display in a large shop or the like.

As shown in FIG. 2, each television A, B, C, D, and E includes a broadcast receiver 10, a signal processor 20, a display unit 30, a communication unit 40, and a controller 50 controlling the broadcast receiver 10, the signal processor 20, and the communication unit 40. The controller 50 may alternatively control the display unit 30.

The broadcast receiver 10 is tuned to a channel frequency under control of the controller 50, and receives a broadcasting signal of a corresponding channel. The broadcast receiver 10 includes a channel detection module (not shown) and a radio frequency (RF) demodulation module (not shown).

The signal processor 20 processes the received broadcasting signal and displays the processed broadcasting signal on the display unit 30. When the user setting item is changed under the control of the controller 50, the signal processor 20 processes the broadcasting signal on the basis of the changed user setting items. The signal processor 20 may include, for example, a demultiplexer, a video decoder, an audio decoder, etc., but these components are not shown.

The display unit 30 includes a display panel (not shown) on which an image is displayed, and a panel driver (not shown) for driving the display panel. The display panel may include a liquid crystal display (LCD) panel, an organic light emitting diode (OLED) panel, a plasma display panel (PDP), or the like.

Further, each television A, B, C, D, and E may have a speaker (not shown).

The communication unit 40 communicates with another external television under the control of the controller 50. The communication unit 40 may be achieved by various wired and/or wireless communication modules, operating at various frequencies, such as local area network (LAN), Bluetooth, radio frequency (RF), serial communication, or Ethernet, or some combination thereof.

The controller 50 detects data of one or more user setting items set in the televisions communicatable through the communication unit 40 and changes the user setting items on the basis of the detected data if a batch change function to change the user setting items of the communicatable televisions in a lump is selected. Here, the batch change function refers to that when one or more user setting items is set up or changed in one television, the user setting items of the other televisions are also changed in a lump. If a user changes one or more user setting items of a television among the plurality of televisions, the user setting items of the other televisions are also changed, so that there is no need of performing a changing operation for the plurality of televisions one by one.

In the related art, the televisions provided in a hotel, a school, a shop, or a similar place are individually used by many users, but all have to be managed and controlled by a specific main agent. In this case, a user setting item that is changed in a certain television is stored in a storage medium and then backed up to the other televisions one by one, so that it is very cumbersome and inconvenient.

In this exemplary embodiment, the user setting item for televisions A, B, C, D and E is automatically changed, that is, undergoes a batch change function to be automatically undated. There is no master and no slave among the plurality of communicatable televisions. Each television can communicate with another television one to one. The controller 50 receives data about the user setting item that is set in another television in real time through the communication unit 40, and determines whether a present user setting item is different from that of the other television, on the basis of the detected data. In result, if the user setting item of the other television was changed, the controller 50 changes its own present user setting item correspondingly.

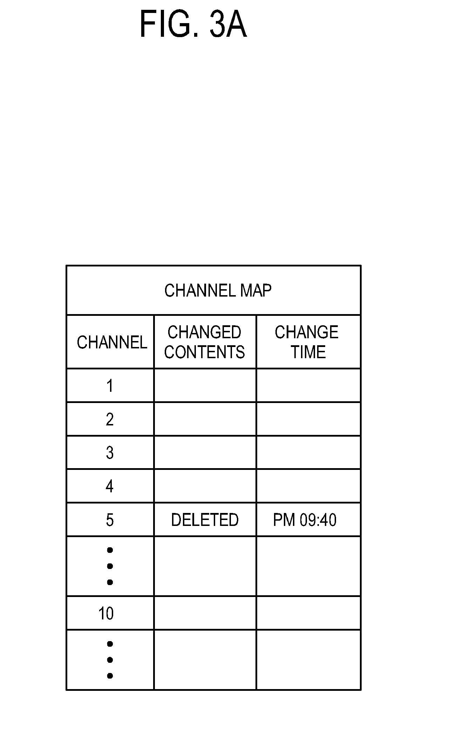

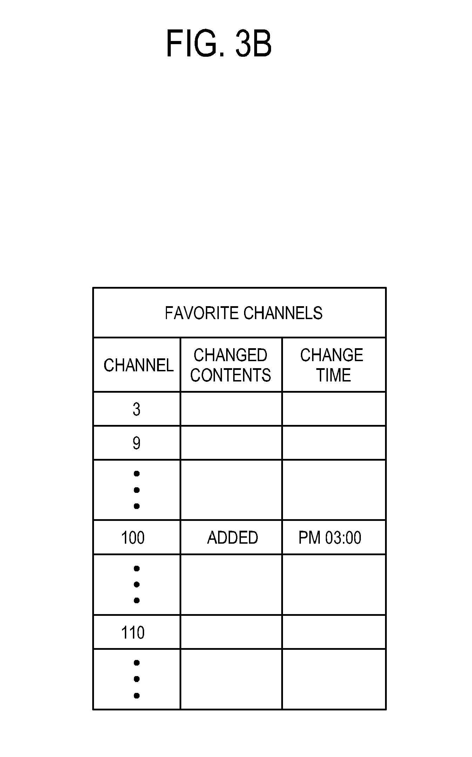

FIGS. 3A and 3B show examples of user setting items according to an exemplary embodiment, in which FIG. 3A shows a channel map of tunable channels, and FIG. 3B shows a channel map of favorite channels. The user setting items shown in FIGS. 3A and 3B may be user setting items of the television of FIG. 2. For example, referring to FIG. 3A, if the present channel map includes a channel No. 5 but the channel No. 5 is deleted from another channel map detected from another television, the controller 50 deletes the channel No. 5 from its own channel map.

As shown in FIGS. 3A and 3B, information received from another television may include not only data about the user setting items but also time information (for example, PM 09:40) at which the user setting item is changed. Using the time information, the controller 50 may change the user setting item on the basis of the latest setup data among the detected data.

In order to provide information about a user setting item that is changed in the present television to another television, the controller 50 controls the changed data with regard to the user setting item and the change time of the data to be stored if the user setting item is changed by a user or changed corresponding to the change of another television.

FIG. 3B relates to a favorite channel map in which favorite channels are stored. If a channel No. 100 is added to the favorite channel map through a certain television, the favorite channel maps of the other televisions among the communicatable televisions may be changed correspondingly.

Thus, in the television system including the plurality of televisions, the user setting items can be automatically changed by the batch change function, thereby relieving the burden on a user, decreasing the possibility of an error generated when user setting items are individually changed, and reducing time and effort above all.

According to another exemplary embodiment , an order of priority may be given to the communicatable televisions on which the batch change function acts. In this case, the controller 50 detects the data about the user setting item changed in the television for a certain period of time, and then changes the user setting item according to the order of priority. For example, if, within a period of, for example, one minute, the user setting items are changed in three separate televisions , the controller 50 may perform a batch change to change the three televisions to the user setting items of the television having the highest priority.

Further, in a case in which the user setting items are changed in the plurality of televisions at the same time, the changed data about the user setting items may be different from one another. For instance, if the television A is changed to increase a volume and at the same time the television B is changed to delete a volume, the data comes into conflict with each other. In this case, the controller 50 may change the user setting items on the basis of the data set in the television having the higher priority according to the order of priority set between the television A and the television B.

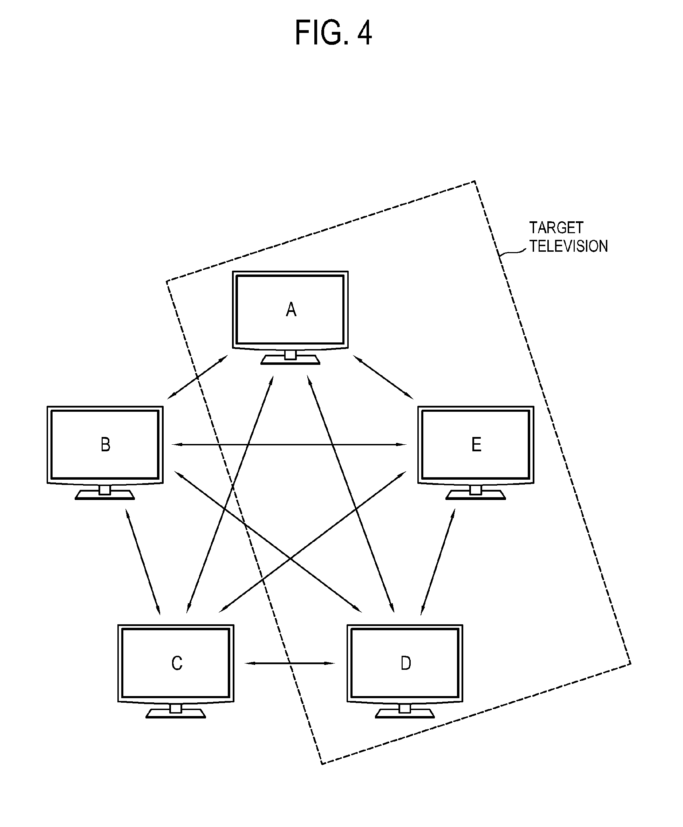

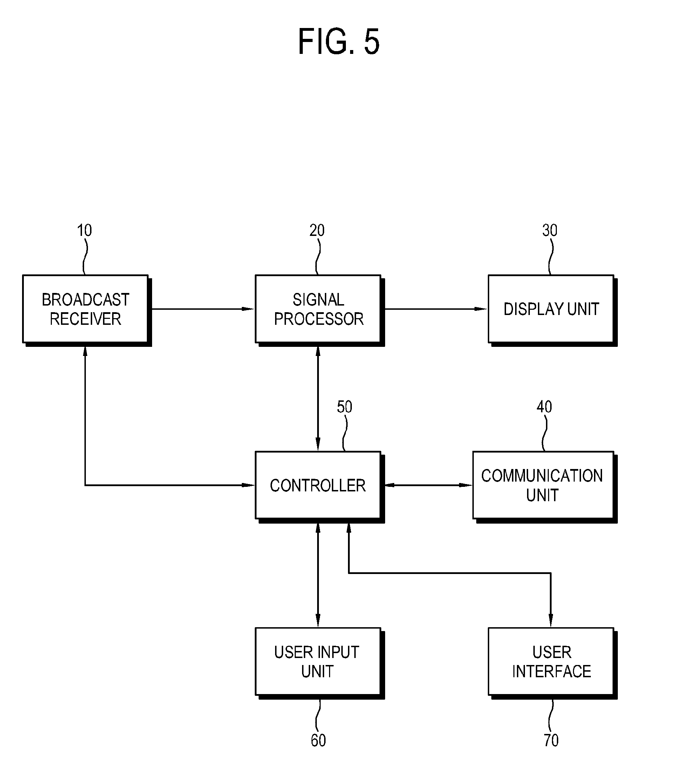

FIG. 4 is a schematic view of a television system according to another exemplary embodiment , and FIG. 5 is a control block diagram of a television in FIG. 4. As shown in FIG. 5, the television in this exemplary embodiment further includes a user input unit 60 and a user interface 70.

The user input unit 60 receives a user's input for setting up the batch change function. The user input unit 60 includes an interface module (not shown) to be manipulated by a user, and a receiving module (not shown) to output a control signal corresponding to a user's manipulation to the controller 50. The user input unit 60 may be achieved by various buttons, a remote controller having various buttons, a touch panel capable of receiving a user's selection through a pointing device, or the like.

Using the user input unit 60, the communication unit 40 and the controller 50, a user sets up target televisions in which the batch change function can be performed, and selects one or more user setting items to which the batch change function is applied. Referring to FIG. 1, four televisions B, C, D and E are communicatable with a present television A. However, as shown in FIG. 4, a user may select the televisions D and E among televisions A, B, C, D, and E (refer to FIG. 4) to enable the batch change function. That is, only the televisions A, D and E are set up as target televisions, so that the batch change function can be performed in only the three televisions. A user may also change the target televisions to a different set, or may release a television from being included in the batch change function.

Also, a user may change, for example, add and delete one or more user setting items, to which the batch change function is applied, as desired. For example, a function of turning on/off the target televisions in a lump may be advantageous for a television system being on shown in a shop, and a function of intercepting a certain channel or limiting a maximum volume of sound may be advantageous for a television system installed in a hospital.

Further, a user may set up, release and change the order of priority among the televisions in which the batch change function is performed.

In this exemplary embodiment, the television further includes the user interface 70 for informing a user that the user setting item is changed. The user interface 70 may be achieved by a graphic user interface (GUI) generator that generates a graphic user interface, a sound unit that gives a beep, a lamp that produces light, or the like. Also, the user interface 70 may inform a user that a certain user setting item is deleted or changed, or that a certain user setting item may not be set up by the user, that is, a permission.

Also, a user may set up a specific time at which the batch time function is implemented. For example, the batch change function may be released from PM 10:00 to AM 06:00, but activated for other times. Alternatively, the controller 50 may transmit the user setting item changed by a user to a different television along with or independently of detecting the user setting item of the different television. That is, if a certain user setting item is changed by a user, other televisions are informed of the changed user setting item, thereby enhancing efficiency of the batch change function and reducing an error. This is advantageous in light of reconfirming the changed user setting item.

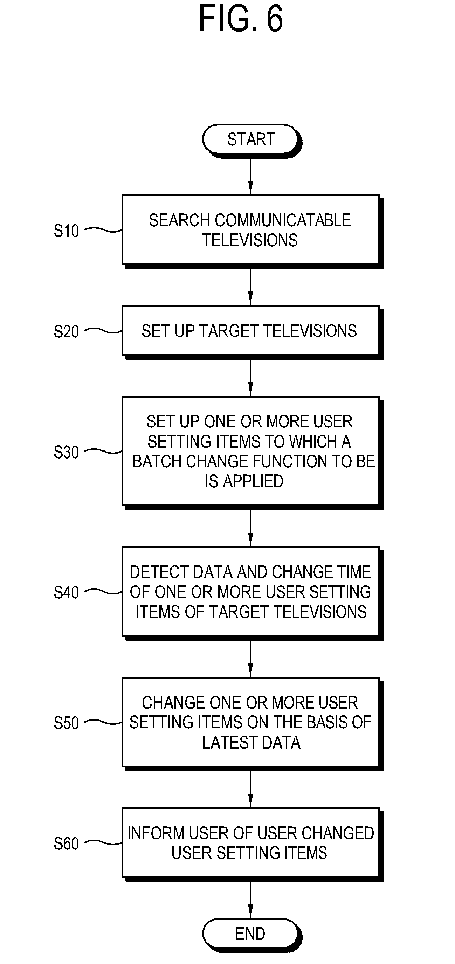

FIG. 6 is a control flowchart for explaining a control method of the television in FIG. 4. Referring to FIG. 6, a control method of the television in this exemplary embodiment is as follows.

Through the user input unit 60, the communication unit 40, and the controller 50, a user first sets up the batch change function to change the user setting items of the communicatable televisions in a lump. An operation of setting up the batch change function includes searching for communicable televisions (S10); and setting up target televisions (S20), in which the batch change function is performed, among the searched televisions. A user may select all th e searched televisions as th e target televisions, and the user input unit 60 may have a function key for selecting the target televisions. Alternatively, the user may select a portion of the searched televisions as the target televisions.

At operation S30, one or more user setting items to which the batch change function is to be applied is set up, thereby setting up the batch change function.

At operation S40, the controller 50 detects the data about the one or more user setting items set in the target televisions and the information about time at which the user setting item is set up, in real time, that is, in very short cycles.

At operation S50, the controller 50 changes the user setting items on the basis of the latest setup data among the detected data. Depending on the type of user setting item that is changed, video and audio signals may be changed by the signal processor 20 on the basis of the user setting items changed.

At operation S60, the controller 50 controls the user interface 70 to inform a user of any changed user setting items.

As described above, according to exemplary embodiments , there are provided a television and a control method thereof, in which a plurality of televisions can be controlled simultaneously.

Also, according to exemplary embodiments , there are provided a television and a control method thereof, in which a user setting item can be changed not manually but automatically.

Further, according to exemplary embodiments , there are provided a television and a control method thereof, in which time and effort to be taken in changing the user setting item can be reduced.

Meanwhile, according to exemplary embodiments , there are provided a television and a control method thereof, in which an error in changing the user setting item can be decreased.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A television comprising
a communication un i t which i s configured to communicate with one or more external televisions; and
a controller which detects, through the communication unit, data about a user setting item set in a television communicatable through the communication unit, and changes a user setting item based on the detected data.

2. The television according to claim 1, wherein the controller changes the user setting item if a batch change function of the user setting item is set up.

3. The television according to claim 1, wherein the controller receives, through the communication unit, information about a time at which the user setting item is set up, and changes the user setting item based on a latest setup data among the detected data.

4. The television according to one of claims 1-3, wherein an order of priority is given among the communicatable televisions, and the controller changes the user setting item on the basis of data set up in a television having a highest priority.

5. The television according to claim 2, further comprising an input unit which receives input,
wherein the controller searches the televisions communicatable through the communication unit and sets up a television selected through the input unit among the searched televisions as a target television in which the batch change function is performed.

6. The television according to claim 1, wherein the user setting item comprises at least one of a power on/off, a channel map, a channel change, a video setting item, and an audio setting item,
further comprising a user input unit which selects the user setting item.

7. The television according to claim 1, wherein, if the user setting item is changed by a user, the controller transmits changed data about the user setting item to the communicatable televisions.

8. The television according to claim 1, wherein, if the user setting item is changed by a user, the controller stores data about the changed user setting item and a time at which the data is changed, and
further comprising a user interface which informs a user of the changed user setting item.

9. A control method of a television comprising a communication unit, the control method comprising:
detecting data about a user setting item set in a television communicatable through the communication unit; and
changing a user setting item based on the detected data.

10. The control method according to claim 9, wherein the detecting the data comprises receiving information about a time at which the user setting item is changed, and
the changing the user setting item comprises changing the user setting item based on a latest setup data among the detected data.

11. The control method according to claim 9, wherein an order of priority is given among the communicatable televisions, and the changing the user setting item comprises changing the user setting item based on data set up in the television having a highest priority.

12. The control method according to claim 9, further comprising setting up a batch change function to change the user setting item of the communicatable televisions in a lump.

13. The control method according to claim 12, wherein the setting up the batch change function comprises:
searching the televisions communicatable through the communication unit;
setting up a target television, in which the batch change function is performed, among the searched televisions; and
setting up the user setting item to which the batch change function is applied.

14. The control method according to claim 9, further comprising informing a user of the changed user setting item.

15. The control method according to claim 9, further comprising transmitting changed data about the user setting item to the communicatable television if the user setting item is changed by a user.
